(19)

Europäisches Patentamt
European Patent Office
Office européen des brevets

(11) **EP 4 175 154 A1**

(12) **EUROPEAN PATENT APPLICATION**

(43) Date of publication:
**03.05.2023 Bulletin 2023/18**

(21) Application number: **22203846.5**

(22) Date of filing: **26.10.2022**

(51) International Patent Classification (IPC):
**H02M 7/49** $^{(2007.01)}$

(52) Cooperative Patent Classification (CPC):
**H02M 1/0043; H02M 7/49**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.10.2021 CN 202111250658**

(71) Applicant: **Silergy Semiconductor Technology
(Hangzhou) Ltd
Hangzhou City, Zhejiang Province 310051 (CN)**

(72) Inventors:
• QI, Yu
  **Hangzhou City, Zhejiang Province, 310051 (CN)**
• CHEN, Wei
  **Hangzhou City, Zhejiang Province, 310051 (CN)**
• ZHAO, Chen
  **Hangzhou City, Zhejiang Province, 310051 (CN)**

(74) Representative: **Viering, Jentschura & Partner
mbB
Patent- und Rechtsanwälte
Am Brauhaus 8
01099 Dresden (DE)**

(54) **CASCADE CIRCUIT AND CORRESPONDING CONTROL METHOD AND INTEGRATED CIRCUIT THEREOF**

(57)     A cascade circuit and corresponding control method and integrated circuit thereof are disclosed. Each of power conversion units is controlled to send a signal to be transmitted to a next-stage power conversion unit when the each of the power conversion units shares ground with the adjacent next-stage power conversion unit. As a result, a number of isolation modules can be reduced, which facilitates the integration of the cascade circuit.

**FIG. 1**

EP 4 175 154 A1

## Description

BACKGROUND OF THE INVENTION

1. Field of the Invention

The present disclosure relates to a technical field of power electronics, more particularly, to a cascade circuit and a corresponding control method and integrated circuit thereof.

2. Description of the Related Art

As compared with traditional power converters, cascaded power converters can withstand higher voltages by connecting multiple power conversion modules in series, and each of the power conversion modules withstands a lower voltage. Currently, cascaded power converters usually adopt a common duty cycle control, that is, all the power conversion modules connected in series share a same modulation signal. At the same time, in order to increase the equivalent switching frequency, the carrier signal(s) usually adopt a carrier phase shift control method.

Since the multiple power conversion modules share the one modulation signal, and the carrier signal(s) need to be synchronized, a lumped control unit is required to generate drive signals to control each of the power conversion modules. However, since the output direct-current (DC) bus of each of the power conversion modules does not share the same ground, the drive signals of the control unit needs to be transmitted to each of the power conversion modules to reach the corresponding drive circuit through an isolation module. Therefore, isolation modules corresponding to the number of power conversion modules are required. Excessive isolation module bring about difficulties in chip integration..

SUMMARY OF THE INVENTION

In light of the above description, one objective of the present disclosure is to provide a cascade circuit and a corresponding control method and integrated circuit thereof, which may reduce a number of the isolation modules and facilitate the integration of the cascade circuit.

A first aspect of the present disclosure provides a cascade circuit. The cascade circuit includes N cascaded power conversion units, in which N is a positive integer greater than or equal to 2, and a controller. The N power conversion units is connected in series between two ports of a power supply. The controller is connected to one of the N cascaded power conversion units and is configured to send a signal to be transmitted through the connected power conversion unit. Each of the power conversion units is configured to send the signal to be transmitted to a next-stage power conversion unit when the each of the power conversion unit shares a reference voltage with the adjacent next-stage power conversion unit.

In some embodiments, the signal to be transmitted includes a modulation signal. The each of the power conversion unit is configured to generate drive signals based on the modulation signal to perform power conversion.

In some embodiments, the each of the power conversion unit includes a first arm and a second arm. The first arm includes a first switch and a second switch connected in series between a bus of a current power conversion unit and the reference voltage. The second arm is connected in parallel with the first arm, and includes a third switch and a fourth switch connected in series between the bus of the current power conversion unit and the reference voltage. A midpoint of the first arm of a first power conversion unit is connected to a first port of a power supply, a midpoint of the first arm of each of the other power conversion units is connected to a midpoint of the second arm of a previous-stage power conversion unit, a midpoint of the second arm of an Nth power conversion unit is connected to a second port of the power supply, and a midpoint of each arm is a common connection point of switches in the each of the arms.

In some embodiments, states of the first switch and the second switch are complementary. States of the third switch and the fourth switch are complementary. A phase difference between the first switch and the third switch is 180°.

In some embodiments, in response to turning on the fourth switch of the second arm of the current power conversion unit and the second switch of the first arm of the adjacent next-stage power conversion unit simultaneously, the current power conversion unit and the adjacent next-stage power conversion unit share the reference voltage.

In some embodiments, in response to a same bus voltage of the current power conversion unit and the adjacent next-stage power conversion unit and turning on the third switch of the second arm of the current power conversion unit and the first switch of the first arm of the adjacent next-stage power conversion unit simultaneously, the current power conversion unit and the adjacent next-stage power conversion unit share the reference voltage.

In some embodiments, the first switch is turned on and the second switch is turned off when the modulation signal is greater than a first carrier signal, the first switch is turned off and the second switch is turned on when the modulation signal is smaller than the first carrier signal, the third switch is turned on and the fourth switch is turned off when the modulation signal is smaller than a second carrier signal, the third switch is turned off and the fourth switch is turned on when the modulation signal is greater than the second carrier signal.

In some embodiments, the each of the power conversion units further includes a communication and drive circuit, which includes a signal receiving circuit, a carrier signal generating circuit, a drive signal generating circuit, and a signal sending circuit. The signal receiving circuit is configured to receive the signal to be transmitted. The carrier signal generating circuit is configured to generate a first carrier signal corresponding to the first arm of the current power conversion unit and a second carrier signal corresponding to the second arm of the current power conversion unit based on a carrier generation signal. The drive signal generating circuit is configured to generate drive signals of the first arm based on the modulation signal and the first carrier signal and drive signals of the second arm based on the modulation signal and the second carrier signal to be respectively configured to control the first arm and the second arm. The signal sending circuit is configured to send the signal to be transmitted.

In some embodiments, the carrier signal generating circuit includes a first carrier signal generating circuit and a first phase shifting circuit. The first carrier signal generating circuit is configured to generate the first carrier signal based on the carrier signal generation signal. The first phase shifting circuit is configured to phase-shift the first carrier signal so as to generate the second carrier signal. A phase difference between the second carrier signal and the first carrier signal is 180°.

In some embodiments, the first carrier signal generating circuit is configured to receive the carrier generation signal for generating carrier signals of the current power conversion unit before power conversion is performed. The carrier generation signal includes a carrier phase, a carrier period, and a synchronization signal.

In some embodiments, the communication and drive circuit further includes a communication enable signal generating circuit. The communication enable signal generating circuit is configured to output a communication enable signal that is effective when the current power conversion unit shares the reference voltage with the adjacent next-stage power conversion unit, so as to control the signal sending circuit of the current power conversion unit to send the signal to be transmitted to the next-stage power conversion unit.

In some embodiments, the communication enable signal generating circuit includes a first comparator, a second comparator, and a logic circuit. The first comparator is configured to output a first comparison result based on the modulation signal and the second carrier signal of the current power conversion unit. The second comparator is configured to output a second comparison result based on the modulation signal and the first carrier signal of the next-stage power conversion unit. The logic circuit is configured to generate the communication enable signal based on the first comparison result and the second comparison result.

In some embodiments, the first carrier signal of the next-stage power conversion unit received by the second comparator is generated by phase-shifting the first carrier signal of the current power conversion unit

by $\frac{\pi}{N}$, or is obtained from a signal output by the first carrier signal generating circuit of the next-stage power conversion unit.

In some embodiments, the cascade circuit further includes an isolation unit. The isolation unit is connected between an Nth power conversion unit and a first power conversion unit, and is configured to isolate signals between the Nth power conversion unit and the first power conversion unit.

In some embodiments, when the first power conversion unit is connected to the controller, an output terminal of the isolation unit is connected to the first power conversion unit through the controller. When the Nth power conversion unit is connected to the controller, the output terminal of the isolation unit is connected to the Nth power conversion unit through the controller.

In some embodiments, when a Kth power conversion unit is connected to the controller, an output terminal of the isolation unit is connected to the first power conversion unit, and the signal to be transmitted output by the Nth power conversion unit is transmitted to the first power conversion unit through the isolation unit, where K is a positive integer, 1 < K < N.

A second aspect of the present disclosure provides a control method of a cascade circuit. The cascade circuit includes N cascaded power conversion units, N is a positive integer greater than or equal to 2. The control method includes: sending a signal to be transmitted to a connected power conversion unit through a controller; and controlling each of the power conversion units to send the signal to be transmitted to a next-stage power conversion unit when the each of the power conversion unit shares a reference voltage with the adjacent next-stage power conversion unit.

In some embodiments, the signal to be transmitted includes a modulation signal. The control method further includes: generating drive signals based on the modulation signal to perform power conversion.

In some embodiments, generating the drive signals based on the modulation signal to perform power conversion includes: controlling states of a first switch and a second switch of a first arm to be complementary, controlling states of a third switch and a fourth switch of a second arm to be complementary, and a phase difference between the first switch and the third switch being 180°.

In some embodiments, in response to turning on the fourth switch of the second arm of the previous-stage power conversion unit and the second switch of the first arm of the adjacent next-stage power conversion unit simultaneously, the previous-stage power conversion unit and the adjacent next-stage power conversion unit share the reference voltage.

In some embodiments, in response to a same bus voltage of the previous-stage power conversion unit and the adjacent next-stage power conversion unit and turning on of the third switch of the second arm of the previous-stage power conversion unit and the first switch of the first arm of the adjacent next-stage power conversion unit simultaneously, the previous-stage power conversion unit and the adjacent next-stage power conversion unit share the reference voltage.

In some embodiments, generating the drive signals based on the modulation signal to perform power conversion includes: generating a first carrier signal corresponding to the first arm and a second carrier signal corresponding to the second arm based on a carrier generation signal; and generating drive signals of the first arm based on the modulation signal and the first carrier signal and generating drive signals of the second arm based on the modulation signal and the second carrier signal, which are respectively configured to control the first arm and the second arm.

In some embodiments, controlling the first arm and the second arm includes: controlling the first switch of the first arm to be turned on and the second switch of the first arm to be turned off in response to the modulation signal being greater than the first carrier signal, controlling the first switch of the first arm to be turned off and the second switch of the first arm to be turned on in response to the modulation signal being smaller than the first carrier signal; and controlling the third switch of the second arm to be turned off and the fourth switch of the second arm to be turned on in response to the modulation signal being greater than the second carrier signal, controlling the third switch of the second arm to be turned on and the fourth switch of the second arm to be turned off in response to the modulation signal being smaller than the second carrier signal.

In some embodiments, generating the first carrier signal corresponding to the first arm and the second carrier signal corresponding to the second arm based on the carrier generation signal includes: receiving the carrier generation signal before power conversion is performed, the carrier generation signal including a carrier phase, a carrier period, and a synchronization signal; generating the first carrier signal based on the carrier generation signal; and phase-shifting the first carrier signal to generate the second carrier signal, in which a phase difference between the second carrier signal and the first carrier signal is 180°.

In some embodiments, controlling each of the power conversion units to send the signal to be transmitted to the next-stage power conversion unit when the each of the power conversion unit shares the reference voltage with the adjacent next-stage power conversion unit includes: outputting an effective communication enable signal when the previous-stage power conversion unit shares the reference voltage with the adjacent next-stage power conversion unit so as to control a signal sending circuit of the previous-stage power conversion unit to send the signal to be transmitted to the next-stage power conversion unit.

In some embodiments, outputting the effective communication enable signal includes the following steps: outputting a first comparison result based on the modulation signal and the second carrier signal of the previous-stage power conversion unit; outputting a second comparison result based on the modulation signal and the first carrier signal of the next-stage power conversion unit; and generating the communication enable signal based on the first comparison result and the second comparison result.

In some embodiments, the first carrier signal of the next-stage power conversion unit is generated by phase-shifting the first carrier signal of the previous-stage power conversion unit by $\dfrac{\pi}{N}$, or is generated by the next-stage power conversion unit by receiving the carrier generation signal.

A third aspect of the present disclosure provides an integrated circuit. The integrated circuit includes the cascade circuit described in the first aspect.

The technical solution of the embodiments of the present disclosure controls each of the power conversion units to send the signal to be transmitted to the next-stage power conversion unit when the each of the power conversion units shares the reference voltage with the adjacent next-stage power conversion unit. As a result, the number of the isolation modules can be reduced, and the integration of the cascade circuit is facilitated.

Other features and advantages of the present disclosure will be explained in the following description, and will partially become apparent from the description or be appreciated by implementing the present disclosure. The objectives and other advantages of the present disclosure may be realized and obtained by structures particularly specified in the description, the appended claims and the accompanying drawings.

BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

Fig. 1 is a schematic diagram of a cascade circuit according to a first embodiment of the present disclosure.

Fig. 2 is a circuit diagram of the cascade circuit according to a first embodiment of the present disclosure.

Fig. 3 is a circuit diagram of a communication and drive circuit according to one embodiment of the present disclosure.

Fig. 4 is a waveform diagram of drive signals according to one embodiment of the present disclosure.

Fig. 5 is a circuit diagram of a connection of rectifier circuits of two adjacent power conversion units according to one embodiment of the present disclosure.

Fig. 6 is an equivalent circuit diagram when two adjacent power conversion units share ground according to one embodiment of the present disclosure.

Fig. 7 is an equivalent circuit diagram when two adjacent power conversion units share ground according to another embodiment of the present disclosure.

Fig. 8 is a circuit diagram of a communication enable signal generating circuit according to one embodiment of the present disclosure.

Fig. 9 is a waveform diagram of a communication enable signal of one power conversion unit according to one embodiment of the present disclosure.

Fig. 10 is a waveform diagram of communication enable signals of various power conversion units according to one embodiment of the present disclosure.

Fig. 11 is a schematic diagram of a cascade circuit according to a second embodiment of the present disclosure.

Fig. 12 is a flowchart of a control method according to one embodiment of the present disclosure.

DESCRIPTION OF THE EMBODIMENTS

The present disclosure is described below with reference to the embodiments, however, the present disclosure is not limited thereto. The following detailed description of the disclosure elaborates on some specific details. Those skilled in the art can fully understand the present disclosure without the description of these details. Well-known methods, procedures, processes, components and circuits are not described in detail to avoid obscuring the essence of the present disclosure.

In addition, those skilled in the art should understand that drawings are only for the purpose of illustration and are not drawn to scale.

At the same time, it should be understood that in the following description, "circuit" refers to a conducting loop formed by at least one component or sub-circuit through electrical connection or electromagnetic connection. When a component or circuit is referred to as being "connected" to another component or a component/circuit is referred to as being "connected" between two nodes, it may be directly coupled or connected to another component or intervening component(s) may be present. The connection between the components may be physical, logical, or a combination thereof. On the contrary, when a component is referred to as being "directly coupled" or "directly connected" to another component, it is meant that there are no intervening component(s) present therebetween.

Unless otherwise required by the context, it will be understood that in the description herein and throughout the claims that follow, the terms "comprise" or "comprising," "include" or "including" and the like used herein are to be understood to be open-ended, that is, including but not limited to.

In the description of the present disclosure, it should be noted that the terms "first" and "second" are only used for the purpose of description, and should not be construed as indicating or implying relative importance. Additionally, in the description of the present disclosure, "multiple" means two or more unless otherwise specified.

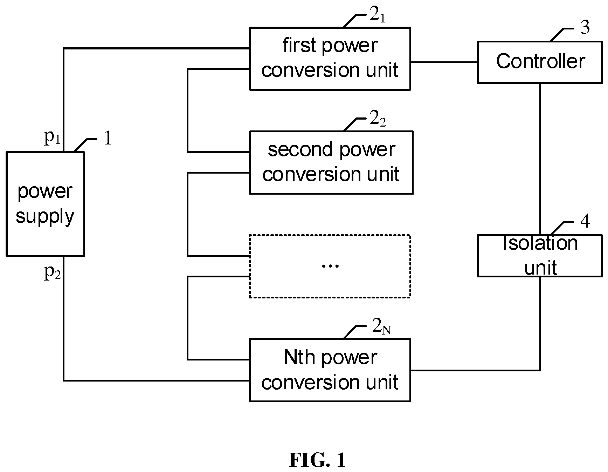

Fig. 1 is a schematic diagram of a cascade circuit according to a first embodiment of the present disclosure. In the embodiment shown in Fig. 1, the cascade circuit includes a power supply 1, multiple power conversion units, a controller 3, and an isolation unit 4. The embodiment shown in Fig. 1 is described by taking a number of the power conversion units to be N as an example, which are respectively $2_1$, $2_2$ ... $2_N$, where N is a positive integer greater than or equal to 2. The multiple power conversion units are connected in series between two ports of the power supply 1, and are configured to output an output signal of the power supply 1 after conversion.

In the present embodiment, the power supply 1 includes a first port pi and a second port $p_2$. The multiple power conversion units are connected in series between the first port pi and the second port $p_2$ of the power supply 1.

Furthermore, for convenience of description, in Fig. 1, the power conversion unit $2_1$ connected to the first port pi is denoted as a first power conversion unit, the power conversion unit 22 connected to the first power conversion unit $2_1$ is denoted as a second power conversion unit, and the power conversion unit $2_N$ connected to the second port $p_2$ is denoted as an Nth power conversion unit as deduced by analogy. However, the counting method of the power conversion units in the embodiment of the present disclosure is not limited. For example, the power conversion unit connected to the second port $p_2$ may be denoted as the first power conversion unit, the power conversion unit connected to the first port pi may be denoted as the Nth power conversion unit. It should also be understood that the first port pi and the second port $p_2$ shown in Fig. 1 may be interchanged.

In the present embodiment, the controller 3 is connected to one of the multiple cascaded power conversion units, and is configured to send a signal to be transmitted to the connected power conversion unit.

In the embodiment shown in Fig. 1, the power conversion unit connected to the controller 3 is the first power conversion unit 2i; that is, the controller 3 sends the signal to be transmitted to the first power conversion unit 2i.

In the present embodiment, the isolation unit 4 is connected between the Nth power conversion unit $2_N$ and the controller 3, and is configured to transmit an output signal of the Nth power conversion unit $2_N$ to the controller 3 so as to ensure that the transmitted signal is correct. As a result, the first to the Nth power conversion units $2_1$-$2_N$ work in predetermined phases cyclically.

Furthermore, the first power conversion unit $2_1$ transmits a signal to the second power conversion unit $2_2$ after receiving the signal to be transmitted sent by the controller 3. The second power conversion unit $2_2$ transmits the signal to a next-stage power conversion unit, and so forth, until the signal is transmitted to the Nth power conversion unit $2_N$. The Nth power conversion unit $2_N$ then transmits the signal to the controller 3 through the isolation unit 4.

Furthermore, the first power conversion unit $2_1$ to an (N-1)th power conversion unit $2_{N-1}$ are configured to send the signal to be transmitted to the next-stage power conversion unit when sharing a reference voltage with the adjacent next-stage power conversion unit. That is, the ith power conversion unit $2_i$ sends the signal to be transmitted to an (i+1)th power conversion unit $2_{i+1}$ when sharing the reference voltage with the (i+1)th power conversion unit $2_{i+1}$, where i=1, 2, ... N-1.

In some embodiments, the signal to be transmitted is a modulation signal, so that each of the power conversion units generates drive signals based on the modulation signal to perform power conversion. The embodiments of the present disclosure do not limit the method of generating the modulation signal, and the controller may generate the modulation signal based on various methods in the related art.

In addition, a system may use the same modulation signal to control all the power conversion units, or it may use different modulation signals for the power conversion units. Under this circumstance, the modulation signals herein are data packets including modulation signals respectively corresponding to all the power conversion units. Each of the power conversion units obtains the corresponding modulation signal from the data packets according to its own number. For convenience of description, all the power conversion units using the same modulation signal is taken as an example for illustration as follows. It should be understood that during the working process of the system, the modulation signal will change dynamically with a change of an output signal of each power conversion unit.

Furthermore, each of the power conversion units generates the drive signals based on the modulation signal and carrier signals, and further performs power conversion according to the drive signals. Hence, each of the power conversion units needs to obtain the carrier signals. In greater detail, before each of the power conversion units performs power conversion, the each of the power conversion units receives a carrier generation signal, the carrier generation signal includes a carrier phase, a carrier period, and a synchronization signal, and the each of the power conversion units generates the corresponding carrier signals based on the carrier phase, the carrier period, and the synchronization signal. When each of the power conversion units performs the power conversion, the power conversion is performed based on its corresponding carrier signals and the modulation signal.

Furthermore, the controller 3 sends the carrier phase, the carrier period, and the synchronization signal to the first power conversion unit $2_1$. At the same time, the first power conversion unit $2_1$ sends the carrier phase, the carrier period, and the synchronization signal to the second power conversion unit $2_2$, and so forth, until all the power conversion units have obtained the carrier phase, the carrier period, and the synchronization signal.

If the method in the related art is used, the controller needs N isolation units to respectively connect to the power conversion units, which is disadvantageous for the integration of the cascade circuit. However, through the technical solution of the embodiments of the present disclosure, each of the power conversion units is controlled to send the signal to be transmitted to the next-stage power conversion unit when the each of the power conversion units shares the reference voltage with the adjacent next-stage power conversion unit. Therefore, only one isolation unit is required to decrease a number of the isolation modules, which facilitates the integration of the cascade circuit.

Furthermore, the power conversion unit according to the embodiment of the present disclosure may be various existing power converters. For example, the power conversion unit may be a rectifier or a DC-DC converter, etc.

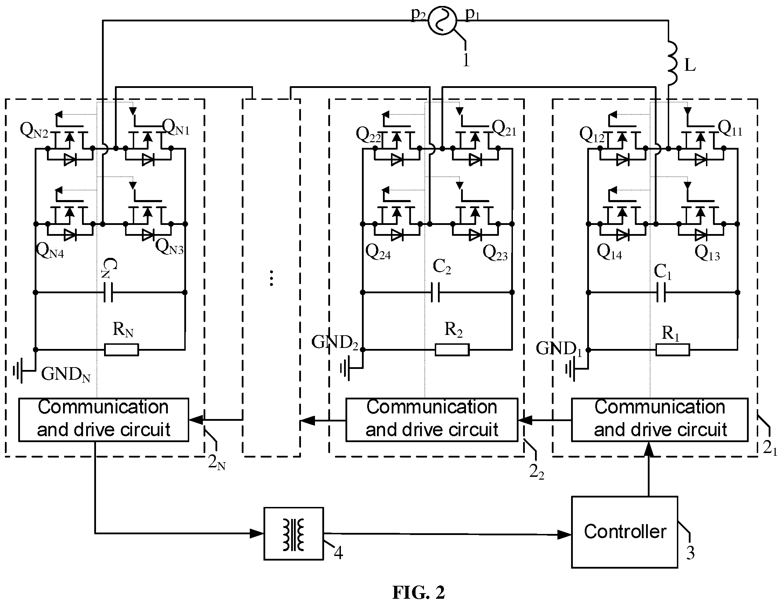

Take the power conversion unit being a rectifier as an example for illustration, Fig. 2 is a circuit diagram corresponding to Fig. 1. In the embodiment shown in Fig. 2 :

The power supply 1 is an alternating current (AC) power supply and is configured to output an AC signal. The power conversion unit is configured to rectify the AC signal.

Furthermore, the cascade circuit includes an inductor L, which is connected between the first port pi of the power supply 1 and the first conversion unit $2_1$ and is configured to filter an electrical signal output by the power supply 1.

Furthermore, the power conversion unit includes a rectifier circuit. The rectifier circuit is a full-bridge circuit and includes a first arm and a second arm. The first arm and the second arm are connected in parallel to an output terminal of the rectifier circuit. The first arm includes a first switch and a second switch connected in series between a bus of the power conversion unit and the reference voltage of the power conversion unit. The second arm includes a third switch and a fourth switch. Taking an mth power conversion unit $2_m$ as an example for illustration, the first switch is $Q_{m1}$, the second switch is $Q_{m2}$, the third switch is $Q_{m3}$, and the fourth switch is $Q_{m4}$, m=1,2...N. In the present embodiment, the bus of each of the power conversion units refers to a wire connected to a drain of the first switch of the power conversion unit and a drain of the third switch of the power conversion unit. The reference voltage refers to a wire connected between a ground terminal $GND_m$ and a source of the second switch.

A midpoint of the first arm of the first power conversion unit $2_1$ is connected to the first port pi of the power supply 1, a midpoint of the first arm of each of the other power conversion units is connected to a midpoint of the second arm of a previous-stage power conversion unit, and a midpoint of the second arm of the last power conversion unit $2_N$ is connected to the second port $p_2$ of the power supply 1. the midpoint of the first arm is a connection point of the first switch and the second switch, and the midpoint of the second arm is a connection point of the third switch and the fourth switch.

Furthermore, the rectifier circuit rectifies the output signal (or after being filtered by the inductor L) of the power supply 1 and outputs it.

The power conversion unit further includes output capacitors. The output capacitors are connected to the output terminal of the rectifier circuit, and are configured to filter a DC signal output by the rectifier circuit. The output capacitors are $C_1$, $C_2$ ... $C_N$ as shown in Fig. 2.

The power conversion unit further includes a load, which is connected to the output terminal of the rectifier circuit and is connected in parallel with the output capacitor. In Fig. 2, the load is replaced by a resistor, such as $R_1$, $R_2$ ... $R_N$ shown in the figure.

Furthermore, the power conversion unit further includes a communication and drive circuit, which is configured to communicate with the other power conversion units and to control the rectifier circuit.

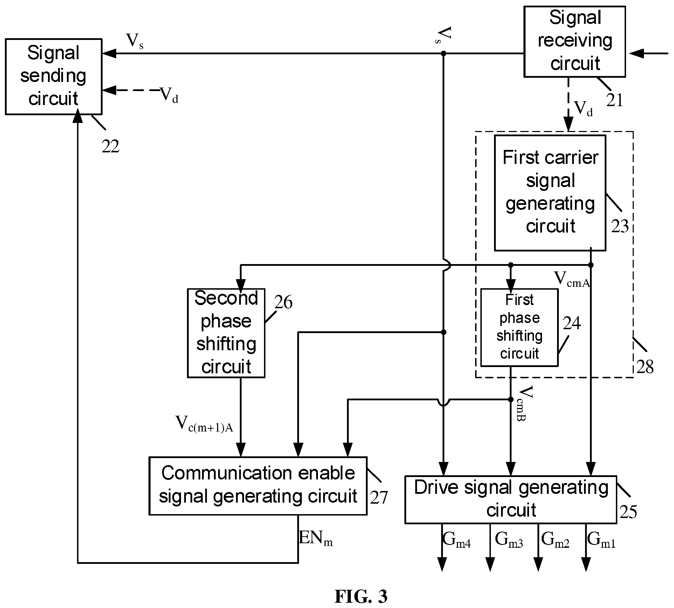

In greater detail, Fig. 3 is a circuit diagram of the communication and drive circuit according to one embodiment of the present disclosure. As shown in Fig. 3, the communication and drive circuit according to the embodiment of the present disclosure includes a signal receiving circuit 21, a signal sending circuit 22, a drive signal generating circuit 25, a second phase shifting circuit 26, a communication enable signal generating circuit 27, and a carrier signal generating circuit 28. The carrier signal generating circuit 28 includes a first carrier signal generating circuit 23 and a first phase shifting circuit 24.

In the present embodiment, the signal receiving circuit 21 is configured to receive the carrier generation signal before the rectifier circuit is started, and to receive the signal to be transmitted after the rectifier circuit is started.

In greater detail, a signal received by the signal receiving circuit 21 in the first power conversion unit $2_1$ is the signal sent by the controller 3. A signal received by the signal receiving circuit 21 in each of the second to the Nth power conversion units is the signal sent by the connected previous-stage power conversion unit. That is to say, for the mth power conversion unit, the signal received by the signal receiving circuit 21 in the power conversion unit is the signal sent by the controller 3 when m=1, and the signal received by the signal receiving circuit 21 in the power conversion unit is the signal sent by the (m-1)th power conversion unit when m=2,3...N.

In greater detail, before the rectifier circuit is started, the signal transmitted between the controller and each of the power conversion units is the carrier generation signal, which includes information such as the carrier phase, the carrier period, and the synchronization signal, etc., used for generating the corresponding carrier signals, namely, a signal $V_d$ in Fig. 3. After the rectifier circuit is started, the signal transmitted between the controller and each of the power conversion units is the modulation signal, namely, a signal $V_s$ in Fig. 3.

In the present embodiment, the carrier signal generating circuit 28 is configured to generate the carrier signals based on the signal $V_d$. The signal $V_d$ includes the carrier phase, the carrier period, and the synchronization signal.

Furthermore, the carrier signal generating circuit 28 is configured to generate a first carrier signal $V_{cmA}$ and a second carrier signal $V_{cmB}$ based on the carrier phase, the carrier period, and the synchronization signal. The first carrier signal $V_{cmA}$ is a carrier signal of the first arm. The second carrier signal $V_{cmB}$ is a carrier signal of the second arm.

In the present embodiment, the carrier signal generating circuit 28 includes the first carrier signal generating circuit 23 and the first phase shifting circuit 24. The first carrier signal generating circuit 23 is configured to generate the first carrier signal $V_{cmA}$ based on the carrier generation signal $V_d$. The first phase shifting circuit 24 is configured to phase-shift the first carrier signal $V_{cmA}$ so as to generate the second carrier signal $V_{cmB}$.

Furthermore, a phase difference between the first carrier signal $V_{cmA}$ and the second carrier signal $V_{cmB}$ is 180 degrees (°).

In greater detail, before the rectifier circuit is started, the controller 3 transmits the information configured for generating the corresponding carrier signals by each of the power conversion units, including the carrier phase, the carrier period, and the synchronization signal, through a communication and drive circuit between adjacent power conversion units (which may be the same circuit as the signal sending circuit 22 and the signal receiving circuit 21 that transmit the modulation signal $V_s$ when the circuit is started, or may be a different circuit. For convenience of description, in the present embodiment, the communication and drive circuit is the same circuit as the signal sending circuit 22 and the signal receiving circuit 21 that transmit the modulation signal $V_s$

when the circuit is started). Each of the power conversion units generates the correct carrier phase shifting effect based on the synchronization signal and the corresponding carrier phase. Afterwards, the carrier signal generation circuit 28 in each of the power conversion units uses a timer to generate a triangular carrier signal based on the carrier period, and generates the first carrier signal $V_{cmA}$ with a phase corresponding to the phase difference of the synchronization signal by phase shifting according to the carrier phase, and further phase-shifts the first carrier signal $V_{cmA}$ by 180° to generate the second carrier signal $V_{cmB}$.

It should be understood that the generation of the carrier signals needs to be completed before the rectifier circuit is activated. In greater detail, before the rectifier circuit works, lower transistors of all the power conversion units may be turned on, such that all the power conversion units share the reference voltage and the signal may be transmitted directly. After the signal has been transmitted, the normal circuit is then allowed to work. Of course, the signal transmission before the rectifier circuit is started may further adopt some other methods, and the present disclosure is not limited in this regard.

In the present embodiment, the drive signal generating circuit 25 is configured to generate the drive signals based on the modulation signal $V_s$, the first carrier signal $V_{cmA}$, and the second carrier signal $V_{cmB}$, after the rectifier circuit is started to control the state of the switches in the full-bridge circuit. In greater detail, the drive signals includes $G_{m1}$, $G_{m2}$, $G_{m2}$, and $G_{m4}$, which are respectively configured for controlling the first switch $Q_{m1}$, the second switch $Q_{m2}$, the third switch $Q_{m3}$, and the fourth switch $Q_{m4}$.

Furthermore, the drive signal generating circuit 25 is configured to generate the drive signals $G_{m1}$ and $G_{m2}$ based on the modulation signal $V_s$ and the first carrier signal $V_{cmA}$, and generate the drive signals $G_{m3}$ and $G_{m4}$ based on the modulation signal $V_s$ and the second carrier signal $V_{cmB}$.

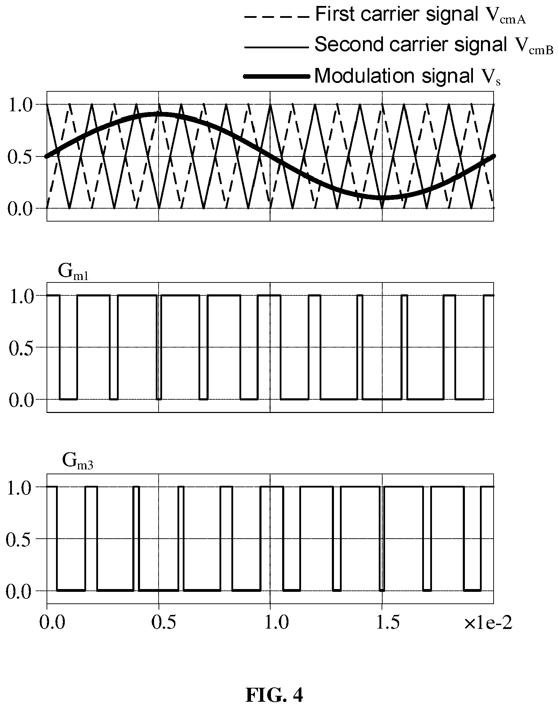

In greater detail, Fig. 4 is a waveform diagram of drive signals according to one embodiment of the present disclosure. Fig. 4 shows a waveform diagram of the first carrier signal $V_{cmA}$, the second carrier signal $V_{cmB}$, and the modulation signal $V_s$. Additionally, Fig. 4 shows a signal waveform diagram of the drive signals $G_{m1}$ and $G_{m3}$. A waveform of $G_{m2}$ is complementary to that of $G_{m1}$, and a waveform of $G_{m4}$ is complementary to that of $G_{m3}$.

Furthermore, a description is provided with reference to Fig. 4. In greater detail, for the first arm, when the modulation signal $V_s$ is greater than the first carrier signal $V_{cmA}$, the drive signal $G_{m1}$ is at a high level and the drive signal $G_{m2}$ is at a low level (not shown in the figure), so that the first switch $Q_{m1}$ is turned on and the second switch $Q_{m2}$ is turned off. When the modulation signal $V_s$ is smaller than the first carrier signal $V_{cmA}$, the drive signal $G_{m1}$ is at the low level and the drive signal $G_{m2}$ is at the high level (not shown in the figure), so that

the first switch $Q_{m1}$ is turned off and the second switch $Q_{m2}$ is turned on. For the second arm, when the modulation signal $V_s$ is greater than the second carrier signal $V_{cmB}$, the drive signal $G_{m3}$ is at the low level and the drive signal $G_{m4}$ is at the high level (not shown in the figure), so that the third switch $Q_{m3}$ is turned off and the fourth switch $Q_{m4}$ is turned on. When the modulation signal $V_s$ is smaller than the second carrier signal $V_{cmB}$, the drive signal $G_{m3}$ is at the high level and the drive signal $G_{m4}$ is at the low level (not shown in the figure), so that the third switch $Q_{m3}$ is turned on and the fourth switch $Q_{m4}$ is turned off.

Furthermore, the drive signals $G_{m1}$, $G_{m2}$, $G_{m3}$, and $G_{m4}$ are pulse width modulation (PWM) signals. In the present embodiment, the first switch $Q_{m1}$, the second switch $Q_{m2}$, the third switch $Q_{m3}$, and the fourth switch $Q_{m4}$ are controlled switches, which may be implemented by using metal-oxide-semiconductor field-effect transistors (MOSFETs). It should be understood that a bipolar junction transistor (BJT) or an insulated gate bipolar transistor (IGBT) may be applicable to the technical solution of the embodiments of the present disclosure.

Furthermore, the communication enable signal generating circuit 27 is configured to output an effective communication enable signal when the current power conversion unit shares the reference voltage with the adjacent next-stage power conversion unit, so as to control the signal sending circuit 22 of the current power conversion unit to send the signal to be transmitted to the next-stage power conversion unit.

The current power conversion unit being the mth power conversion unit is taken as an example for illustration. $V_{cmA}$ denotes the first carrier signal of the mth power conversion unit, and $V_{c(m+1)A}$ denotes the first carrier signal of an (m+1)th power conversion unit. The communication enable signal generating circuit 27 is configured to generate a communication enable signal $EN_m$ based on the second carrier signal $V_{cmB}$ of the current power conversion unit and the first carrier signal $V_{c(m+1)A}$ of the next-stage power conversion unit and the modulation signal $V_s$, so that the mth power conversion unit is able to send the signal to be transmitted to the (m+1)th power conversion unit.

In the present embodiment, the first carrier signal $V_{c(m+1)A}$ of the next-stage power conversion unit received by the communication enable signal generating circuit 27 is configured to be generated by phase shifting by the second phase shifting circuit 26 based on the first carrier signal $V_{cmA}$ of the current power conversion unit. In greater detail, the first carrier signal $V_{c(m+1)A}$ of the next-stage power conversion unit received by the communication enable signal generating circuit 27 may be directly obtained from the first carrier signal output by the first carrier signal generating circuit 23 of the next-stage power conversion unit. The current power conversion unit being the mth power conversion unit is taken as an example for illustration.

In some embodiments, the second phase shifting circuit 26 is configured to phase-shift the signal $V_{cmA}$

$$\frac{\pi}{N}$$

by $N$ to obtain the signal $V_{c(m+1)A}$, N is a total number of power conversion units.

As described above, the first phase shifting circuit 24 phase-shifts the first carrier signal $V_{cmA}$ to generate the second carrier signal $V_{cmB}$. Hence, the communication enable signal generating circuit 27 may generate the communication enable signal $EN_m$ based on the second carrier signal $V_{cmB}$ of the current power conversion unit, the first carrier signal $V_{c(m+1)A}$ of the next-stage power conversion unit, and the modulation signal $V_s$. $EN_m$ denotes the communication enable signal generated by the mth power conversion unit.

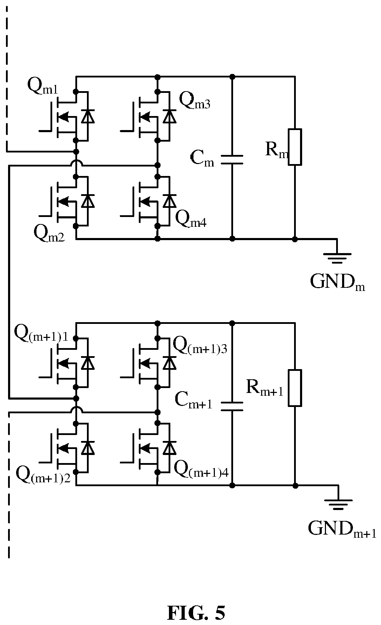

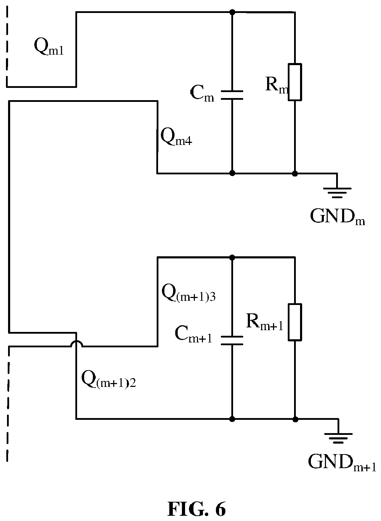

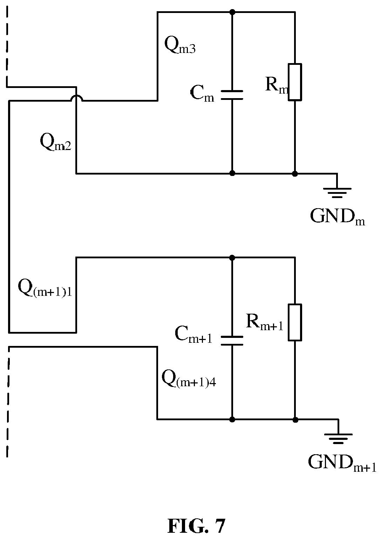

In greater detail, Fig. 5 shows a circuit diagram of a connection of rectifier circuits of the mth power conversion unit and the (m+1)th power conversion unit. As seen from Fig. 5, when the switch $Q_{m4}$ and the switch $Q_{(m+1)2}$ are turned on simultaneously, the reference ground $GND_m$ of the mth power conversion unit is directly connected to a reference ground $GND_{m+1}$ of the (m+1)th power conversion unit, that is, the two power conversion units are in a common ground state. Fig. 6 shows one of the equivalent circuits. That is, for the mth power conversion unit, the switch $Q_{m1}$ and the switch $Q_{m4}$ are turned on. For the (m+1)th power conversion unit, the switch $Q_{(m+1)2}$ and switch $Q_{(m+1)3}$ are turned on. It should be understood that only in a condition that the switch $Q_{m4}$ and the switch $Q_{(m+1)2}$ are turned on simultaneously, and the state of the switches of the other arm of each of the two power conversion units may be arbitrary. For example, for the mth power conversion unit, the switches $Q_{m2}$ and $Q_{m4}$ may be turned on. Similarly, for the (m+1)th power conversion unit, the switches $Q_{(m+1)2}$ and $Q_{(m+1)4}$ may be turned on. Or, when the switch $Q_{m3}$ and the switch $Q_{(m+1)1}$ are turned on simultaneously, a voltage difference between ground terminals of two power conversion units is a difference between bus voltages of the two power conversion units. When voltages output by the rectifier circuits of two power conversion units are equal, the two power conversion units share the reference voltage. Fig. 7 shows one of the equivalent circuits. That is, for the mth power conversion unit, the switch $Q_{m2}$ and the switch $Q_{m3}$ are turned on. For the (m+1)th power conversion unit, the switch $Q_{(m+1)1}$ and switch $Q_{(m+1)4}$ are turned on. It should be understood that only in a condition that the switch $Q_{m3}$ and the switch $Q_{(m+1)1}$ being turned on simultaneously, and the state of the switches of the other arm of each of the two power conversion units may be arbitrary. The bus voltages are output voltages of the rectifier circuits.

For convenience of description, in the embodiment of the present disclosure, the case that the signal is transmitted when the switch $Q_{m4}$ and the switch $Q_{(m+1)2}$ are turn on simultaneously is taken as an example for illustration. As described above, for the second arm, when the modulation signal $V_s$ is greater than the second carrier signal $V_{cmB}$, the third switch $Q_{m3}$ is turned off and the fourth switch $Q_{m4}$ is turned on. For the first arm, when the modulation signal $V_s$ is smaller than the first carrier signal $V_{cmA}$, the first switch $Q_{m1}$ is turned off and the second switch $Q_{m2}$ is turned on.

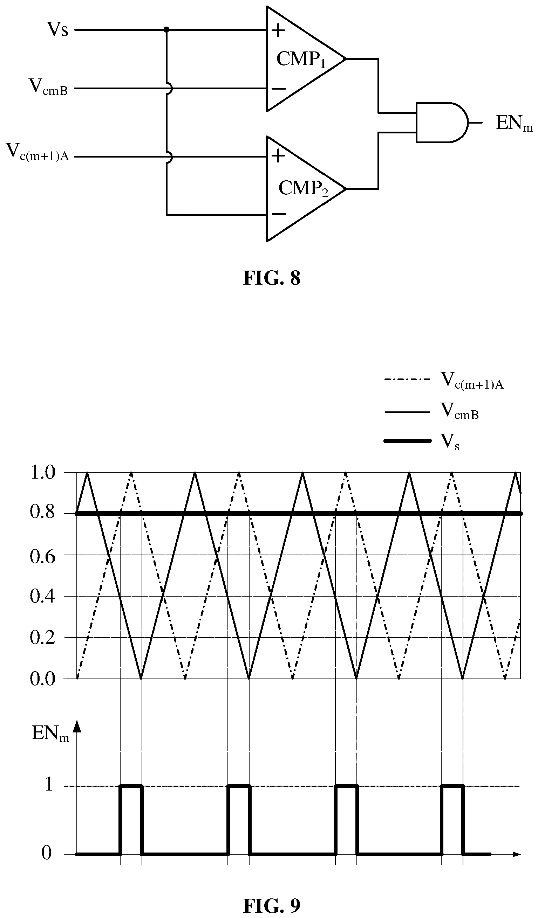

Based on the above description, Fig. 8 provides a circuit diagram of a communication enable signal generating circuit. In the embodiment shown in Fig. 8, the communication enable signal generating circuit 27 includes a first comparator $CMP_1$, a second comparator $CMP_2$, and a logic circuit.

In the present embodiment, the modulation signal $V_s$ is input to a non-inverting input terminal of the first comparator $CMP_1$, and the second carrier signal $V_{cmB}$ of the mth power conversion unit is input to an inverting input terminal of the first comparator $CMP_1$. The modulation signal $V_s$ is input to an inverting input terminal of the second comparator $CMP_2$, and the first carrier signal $V_{c(m+1)A}$ of the (m+1)th power conversion unit is input to a non-inverting input terminal of the second comparator $CMP_2$. The logic circuit is an AND gate. Hence, when the modulation signal $V_s$ is greater than the second carrier signal $V_{cmB}$ of the mth power conversion unit, the output of the first comparator $CMP_1$ is at the high level. When the modulation signal $V_s$ is smaller than the first carrier signal $V_{c(m+1)A}$ of the (m+1)th power conversion unit, the output of the second comparator $CMP_2$ is at the high level. When the outputs of the first comparator $CMP_1$ and the second comparator $CMP_2$ are at the high level, the $EN_m$ output by the AND gate is at the high level, that is, the communication enable signal $EN_m$ is effective at this time. Hence, for the mth power conversion unit, the switch $Q_{m3}$ is turned off and the switch $Q_{m4}$ is turned on. At the same time, for the (m+1)th power conversion unit, the switch $Q_{(m+1)2}$ is turned on and the switch $Q_{(m+1)1}$ is turned off, so that the mth power conversion unit and the (m+1)th power conversion unit share the reference voltage.

It should be understood that the communication enable signal generating circuit shown in Fig. 8 is only an example of the embodiment of the present disclosure, which allows the switch $Q_{m4}$ and the switch $Q_{(m+1)2}$ to be turned on simultaneously. The embodiment of the present disclosure does not limit the circuit structure as long as the effective communication enable signal $EN_m$ may be output when the modulation signal $V_s$ is greater than the signal $V_{cmB}$ and the modulation signal $V_m$ is smaller than the signal $V_{c(m+1)A}$. It should be noted that, in another situation where the two power conversion units share the same reference voltage, when the modulation signal $V_s$ is smaller than the carrier signal $V_{cmB}$ of the second arm of the current power conversion unit and the modulation signal $V_s$ is greater than the carrier signal $V_{c(m+1)A}$ of the first arm of the next-stage power conversion unit, the switch $Q_3$ and the switch $Q_{(m+1)1}$ are turned on at the same time. When the voltages output by the rectifier circuits of the two power conversion units are equal, the two power conversion units share the same reference voltage, and communication can similarly be performed. That is to say, the communication enable signal $EN_m$ is effective. At this time, it corresponds to the situation in which $V_{cmB}$ and $V_{c(m+1)A}$ in Fig. 8 are swapped in position.

Fig. 9 is a waveform diagram of a communication enable signal of the mth power conversion unit according to one embodiment of the present disclosure. Fig. 9 shows a waveform diagram of the signals $V_{cmB}$, $V_{c(m+1)A}$, $V_s$, and $EN_m$. As shown in Fig. 9, for the mth power conversion unit, the communication enable signal $EN_m$ is at the high level to control the signal sending circuit to transmit the signal when the modulation signal $V_s$ is greater than carrier signal $V_{cmB}$ and smaller than carrier signal $V_{c(m+1)A}$. As seen from the figure, an interval in which the communication enable signal $EN_m$ is at the high level is actually determined by an interval in which the modulation signal $V_s$ is smaller than $V_{c(m+1)A}$.

It should be understood that the signals $V_{cmB}$, $V_{c(m+1)A}$, and $V_s$ shown in Fig. 9 are schematic amplifications of part of the signals in Fig. 4. Hence, the modulation signal $V_s$ may be approximated as a straight line.

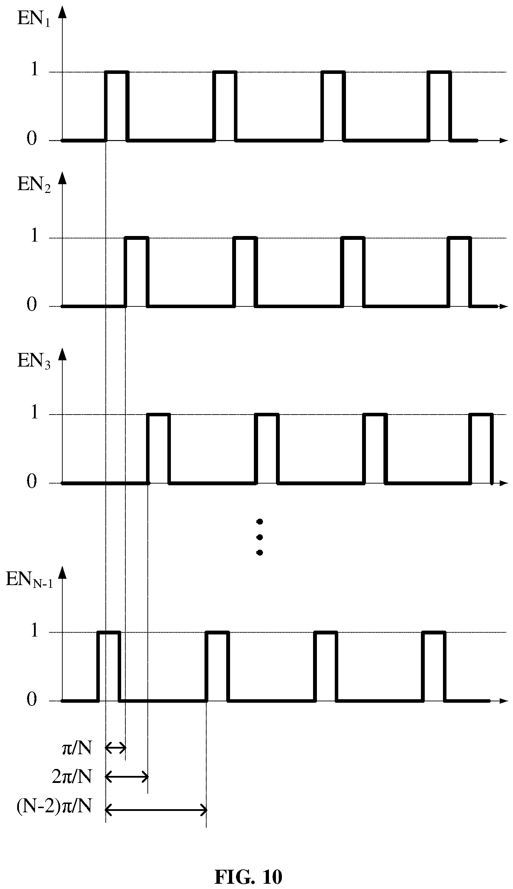

Fig. 10 is a waveform diagram of communication enable signals of various power conversion units according to one embodiment of the present disclosure. Fig. 10 shows a waveform diagram of communication enable signals of the first to the (N-1)th power conversion units. In order to transmit the signal from the first power conversion unit to the Nth power conversion unit as soon as possible, phases of the carrier signals from the first power conversion unit to the Nth power conversion unit are configured at angles that increase sequentially. That is, phase angles of the carrier signals of the first arms are 0, $\dfrac{\pi}{N}$, $\dfrac{2\pi}{N}$, $\cdots$, $\dfrac{(N-1)\pi}{N}$ sequentially from the first power conversion unit to the Nth power conversion unit. Correspondingly, phase angles of the communication enable signals from the first power conversion unit to the (N-1)th power conversion unit increase sequentially, and a phase difference between the communication enable signals of two adjacent power conversion units is $\dfrac{\pi}{N}$. That is, a phase difference between the mth power conversion unit and the first power conversion unit is $(m-1)\dfrac{\pi}{N}$. Therefore, by reasonably configuring a phase shift angle of the carrier signals of each of the power conversion units, the communication may be completed in the shortest possible time.

In the present embodiment, the signal sending circuit 22 is configured to transmit the signal to the next-stage power conversion unit. In greater detail, before the rectifier circuit is started, the signal sending circuit 22 sends the carrier generation signal (including the carrier phase, the carrier period, and the synchronization signal, etc.) to the next-stage power conversion unit. After the rectifier circuit is started, the signal sending circuit 22 sends the modulation signal to the next-stage power conversion unit when the communication enable signal is effective.

In greater detail, before the rectifier circuit is started, the signal sending circuit 22 sends the carrier phase, the carrier period, and the synchronization signal to the next-stage power conversion unit. In greater detail, it may be implemented by using various methods in the related art. For example, the power conversion unit may include two communication enable signal generating circuits, one of which is the circuit shown in Fig. 8 and is configured to start working after the rectifier circuit is started, so as to generate the communication enable signal to control the signal sending circuit when two power conversion units share the same reference voltage. The other communication enable signal generating circuit works before the rectifier circuit is started, so as to control the signal sending circuit to be in a working state all the time. For another example, a switch may be disposed at an output terminal of the power supply, and the switch is controlled to be turned off before starting, so that there are no voltages across the capacitors of all the power conversion units. At the same time, the lower transistors (that is, $Q_{m2}$ and $Q_{m4}$) of the first arm and the second arm of each of the power conversion units are turned on, so that all the power conversion units share the same reference voltage and the signal may be directly transmitted. After the signal transmission is completed, each of the power conversion units is controlled to work normally, and the switch is controlled to be turned on.

It should be noted that in the embodiment shown in Fig. 1, the first to the Nth power conversion units $2_1$-$2_N$ are connected in sequence. Therefore, for the first to the N-1th power conversion units $2_1$-$2_{N-1}$, when they share the reference voltage with the next-stage power conversion units, they can send the signal to be transmitted to the next-stage power conversion units. However, for the signal transmission between the Nth power conversion unit $2_N$ and the controller 3, the signal needs to be transmitted through the isolation unit 4 because there is no common reference voltage between the Nth power conversion unit $2_N$ and the controller 3. As a result, the Nth power conversion unit $2_N$ may send the signal to be transmitted to the controller 3 at any time during a work cycle. Correspondingly, the communication enable signal generating circuit and/or the signal sending circuit or the corresponding working process of the Nth power conversion unit $2_N$ are different from those of the other power conversion units. The embodiment of the present disclosure does not limit the structures and working processes of the communication enable signal generating circuit and/or the signal sending circuit of the Nth power conversion unit $2_N$, as long as the signal to be transmitted may be sent to the controller 3 after the signal to be transmitted sent by the N-1th power conversion unit $2_{N-1}$ is received.

The embodiment of the present disclosure controls each of the power conversion units to send the signal to be transmitted to the next-stage power conversion unit when the each of the power conversion units shares the reference voltage with the adjacent next-stage power conversion unit. As a result, only one isolation unit is required, the number of isolation modules is reduced, and the integration of the cascade circuit is facilitated.

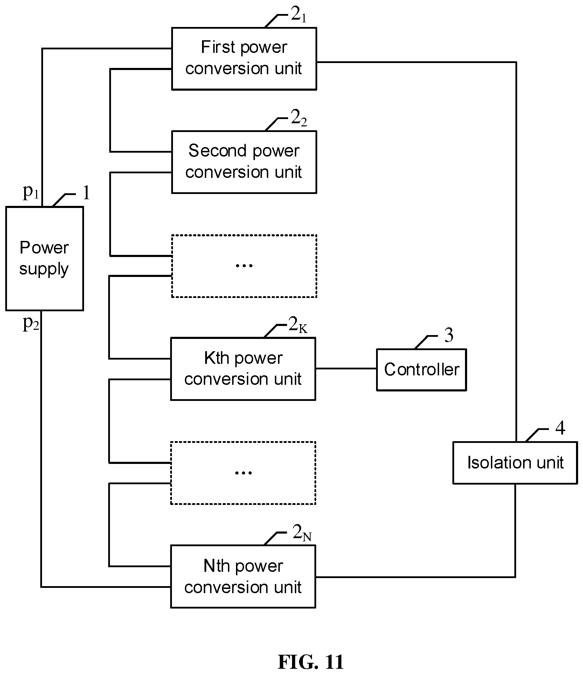

It should be understood that in Fig. 1 and Fig. 2, the case that the controller 3 is connected to the first power conversion unit $2_1$ is taken as an example for illustration. However, the embodiment of the present disclosure is not limited thereto, and the controller 3 may be connected to any of the power conversion units. The working process when the controller 3 is connected to the Nth power conversion unit $2_N$ is similar to that when the controller 3 is connected to the first power conversion unit 2i. When the power conversion unit connected to the controller 3 is a Kth power conversion unit, K= 2, 3...N-1, a schematic diagram of the cascade circuit is shown in Fig. 11.

In the embodiment shown in Fig. 11, the power conversion unit connected to the controller 3 is not the first power conversion unit 2i, which may be any one of the second to the (N-1)th power conversion units $2_2$-$2_{N-1}$.

Correspondingly, the isolation unit 4 is connected between the Nth power conversion unit $2_N$ and the first power conversion unit 2i.

In greater detail, before the rectifier circuit is started, the controller 3 sends the carrier phase, the carrier period, and the synchronization signal to the connected Kth power conversion unit $2_K$. At the same time, the Kth power conversion unit $2_K$ sends the the carrier phase, the carrier period, and the synchronization signal to the (K+1)th power conversion unit $2_{K+1}$, and so forth, until the carrier phase, the carrier period, and the synchronization signal are sent to the Nth power conversion unit $2_N$. The Nth power conversion unit $2_N$ sends the carrier phase, the carrier period, and the synchronization signal to the first power conversion unit $2_1$ through the isolation unit 4 to realize the cyclic working of the N power conversion units with the same phase difference from one another. Similarly, the carrier phase, the carrier period, and the synchronization signal are then sent to the next-stage power conversion unit(s) in sequence from the first power conversion unit $2_1$ until they are sent to the (K-1)th power conversion unit $2_{K-1}$. In this manner, all the power conversion units can receive the carrier phase, the carrier period, and the synchronization signal to obtain the carrier signals based on the carrier phase, the carrier period, and the synchronization signal.

Furthermore, after the rectifier circuit is started, the controller 3 sends the modulation signal $V_s$ to the connected Kth power conversion unit $2_K$. Starting from the Kth power conversion unit $2_K$, when the power conversion unit detects that it shares the reference voltage with the next-stage power conversion unit, the power conversion unit sends the modulated signal $V_s$ to the next-stage power conversion unit until the Nth power conversion unit $2_N$ receives the modulated signal $V_s$. The Nth power conversion unit $2_N$ sends the modulation signal $V_s$ to the first power conversion unit $2_1$ through the isolation unit 4. Similarly, starting from the first power conversion unit 2i, when the power conversion unit detects that it shares the reference voltage with the next-stage power conversion unit, the power conversion unit sends the modulated signal $V_s$ to the next-stage power conversion unit until the (K-1)th power conversion unit $2_{K-1}$ receives the modulated signal $V_s$.

Furthermore, the phase angles of the first carrier signals of the power conversion units should be configured according to the principle of increasing sequentially along the signal transmission path, and a difference between the phase angles of the first carrier signals of the adjacent power conversion units in the path is $\dfrac{\pi}{N}$.

The embodiment of the present disclosure controls each of the power conversion units to send the signal to be transmitted to the next-stage power conversion unit when the each of the power conversion units shares the reference voltage with the adjacent next-stage power conversion unit. As a result, only one isolation unit is required, the number of isolation modules is reduced, and the integration of the cascade circuit is facilitated.

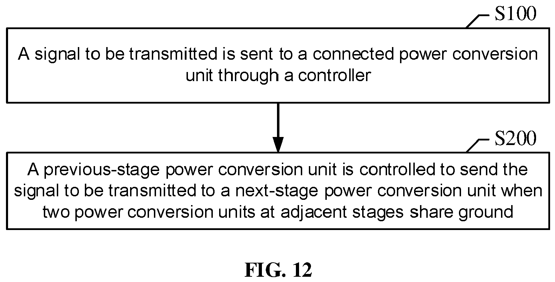

Fig. 12 is a flowchart of a control method corresponding to the cascade circuits according to the above embodiments of the present disclosure. As shown in Fig. 12, the control method of the cascade circuit according to one embodiment of the present disclosure includes the following steps.

Step S100: sending a signal to be transmitted to a connected power conversion unit through a controller.

Step S200: controlling each of the power conversion units to send the signal to be transmitted to a next-stage power conversion unit when the each of the power conversion unit shares a reference voltage with the adjacent next-stage power conversion unit.

In some embodiments, the signal to be transmitted includes a modulation signal. The control method further includes: generating drive signals based on the modulation signal to perform power conversion.

In some embodiments, in greater detail, generating the drive signals based on the modulation signal to perform power conversion includes: controlling states of a first switch and a second switch of a first arm to be complementary, controlling states of a third switch and a fourth switch of a second arm to be complementary, and a phase difference between the first switch and the third switch being 180°.

In some embodiments, in response to turning on the fourth switch of the second arm of the previous-stage power conversion unit and the second switch of the first arm of the adjacent next-stage power conversion unit simultaneously, the previous-stage power conversion unit and the adjacent next-stage power conversion unit share the reference voltage.

In some embodiments, in response to a same bus voltage of the previous-stage power conversion unit and the adjacent next-stage power conversion unit and turning on the third switch of the second arm of the previous-stage power conversion unit and the first switch of the first arm of the adjacent next-stage power conversion unit simultaneously, the previous-stage power conversion unit and the adjacent next-stage power conversion unit share the reference voltage.

In some embodiments, generating the drive signals based on the modulation signal to perform power conversion includes: generating a first carrier signal corresponding to the first arm and a second carrier signal corresponding to the second arm based on a carrier generation signal; and generating drive signals of the first arm based on the modulation signal and the first carrier signal and generating drive signals of the second arm based on the modulation signal and the second carrier signal, which are respectively configured to control the first arm and the second arm.

In some embodiments, controlling the first arm and the second arm includes: controlling the first switch of the first arm to be turned on and the second switch of the first arm to be turned off in response to the modulation signal being greater than the first carrier signal, controlling the first switch of the first arm to be turned off and the second switch of the first arm to be turned on in response to the modulation signal being smaller than the first carrier signal; and controlling the third switch of the second arm to be turned off and the fourth switch of the second arm to be turned on in response to the modulation signal being greater than the second carrier signal, controlling the third switch of the second arm to be turned on and the fourth switch of the second arm to be turned off in response to the modulation signal being smaller than the second carrier signal.

In some embodiments, generating the first carrier signal corresponding to the first arm and the second carrier signal corresponding to the second arm based on the carrier generation signal includes: receiving the carrier generation signal including a carrier phase, a carrier period, and a synchronization signal before power conversion is performed; generating the first carrier signal based on the carrier generation signal; and phase-shifting the first carrier signal to generate the second carrier signal, in which a phase difference between the second carrier signal and the first carrier signal is 180°.

In some embodiments, controlling each of the power conversion units to send the signal to be transmitted to a next-stage power conversion unit when the each of the power conversion unit shares a reference voltage with the adjacent next-stage power conversion unit includes: outputting an effective communication enable signal when the previous-stage power conversion unit shares the reference voltage with the adjacent next-stage power conversion unit so as to control a signal sending circuit of the previous-stage power conversion unit to send the signal to be transmitted to the next-stage power conversion unit.

In some embodiments, outputting the effective communication enable signal includes: outputting a first comparison result based on the modulation signal and the second carrier signal of the previous-stage power conversion unit; outputting a second comparison result based on the modulation signal and the first carrier signal of the next-stage power conversion unit; and generating the communication enable signal based on the first comparison result and the second comparison result.

In some embodiments, the first carrier signal of the next-stage power conversion unit is generated by phase-shifting the first carrier signal of the previous-stage power conversion unit by $\dfrac{\pi}{N}$, or is obtained from a signal output by the first carrier signal generating circuit of the next-stage power conversion unit.

According to the embodiments of the present disclosure, each of the power conversion units is controlled to send the signal to be transmitted to the next-stage power conversion unit when the each of the power conversion units shares the reference voltage with the adjacent next-stage power conversion unit. As a result, only one isolation unit is required to decrease the number of the isolation modules, which facilitates the integration of the cascade circuit.

Although the embodiments disclosed by the present disclosure are discussed above, the embodiments are provided for better understanding of the present disclosure rather than to limit the present disclosure. Anyone skilled in the art, without departing from the spirit or scope of the present disclosure, can make amendments or modification to the present disclosure. Any modification, equivalent replacement, improvement, etc. made within the spirit and principle of the present disclosure shall be within the scope of the present disclosure.

## Claims

1. A cascade circuit, **characterized in that** the cascade circuit comprises:

   N power conversion units ($2_1$, $2_2$ ... $2_N$) connected in series between two ports of a power supply (1), wherein N is a positive integer greater than or equal to 2; and
   a controller (3) connected to one of the N power conversion units ($2_K$) and being configured to send a signal to be transmitted ($V_d$, $V_s$) through the connected power conversion unit ($2_K$);
   wherein each of the power conversion units ($2_1$, $2_2$ ... $2_{N-1}$) is configured to send the signal to be

transmitted ($V_d$, $V_s$) to a next-stage power conversion unit ($2_2$, $2_3$ ... $2_N$) when the each of the power conversion unit ($2_1$, $2_2$ ... $2_{N-1}$) shares a reference voltage ($GND_N$) with the adjacent next-stage power conversion unit ($2_2$, $2_3$ ... $2_N$).

2. The cascade circuit as claimed in claim 1, **characterized in that** the signal to be transmitted ($V_d$, $V_s$) comprises a modulation signal ($V_s$);
wherein the each of the power conversion units ($2_1$, 22 ... $2_N$) is configured to generate drive signals ($G_{m1}$, $G_{m2}$, $G_{m3}$, $G_{m4}$) based on the modulation signal ($V_s$) to perform power conversion.

3. The cascade circuit as claimed in claim 2, **characterized in that** the each of the power conversion units ($2_1$, 22 ... $2_N$) comprises:

a first arm comprising a first switch ($Q_{m1}$) and a second switch ($Q_{m2}$) connected in series between a bus of a current power conversion unit ($2_m$) and the reference voltage ($GND_m$); and
a second arm connected in parallel with the first arm and comprising a third switch ($Q_{m3}$) and a fourth switch ($Q_{m4}$) connected in series between the bus of the current power conversion unit ($2_m$) and the reference voltage ($GND_m$);
wherein a midpoint of the first arm of a first power conversion unit ($2_1$) is connected to a first port (pi) of the power supply (1), a midpoint of the first arm of each of the other power conversion units ($2_2$ ... $2_N$) is connected to a midpoint of the second arm of a previous-stage power conversion unit ($2_1$, $2_2$ ... $2_{N-1}$), a midpoint of the second arm of an Nth power conversion unit ($2_N$) is connected to a second port ($p_2$) of the power supply (1), and a midpoint of each arms being a common connection point of switches in the each of the arms.

4. The cascade circuit as claimed in claim 3, **characterized in that** states of the first switch ($Q_{m1}$) and the second switch ($Q_{m2}$) are complementary, states of the third switch ($Q_{m3}$) and the fourth switch ($Q_{m4}$) are complementary, a phase difference between the first switch ($Q_{m1}$) and the third switch ($Q_{m3}$) is 180°;
and/or
**characterized in that** in response to turning on the fourth switch ($Q_{m4}$) of the second arm of the current power conversion unit ($2_m$) and the second switch ($Q_{m2}$) of the first arm of the adjacent next-stage power conversion unit ($2_{m+1}$) simultaneously, the current power conversion unit ($2_m$) and the adjacent next-stage power conversion unit ($2_{m+1}$) share the reference voltage.

5. The cascade circuit as claimed in any one of claims 3 or 4, **characterized in that** in response to a same bus voltage of the current power conversion unit ($2_m$) and the adjacent next-stage power conversion unit ($2_{m+1}$) and turning on the third switch ($Q_{m3}$) of the second arm of the current power conversion unit ($2_m$) and the first switch ($Q_{m1}$) of the first arm of the adjacent next-stage power conversion unit ($2_{m+1}$) simultaneously, the current power conversion unit ($2_m$) and the adjacent next-stage power conversion unit ($2_{m+1}$) share the reference voltage; and/or
**characterized in that** the first switch ($Q_{m1}$) is turned on and the second switch ($Q_{m2}$) is turned off when the modulation signal ($V_s$) is greater than a first carrier signal ($V_{cmA}$), the first switch ($Q_{m1}$) is turned off and the second switch ($Q_{m2}$) is turned on when the modulation signal ($V_s$) is smaller than the first carrier signal ($V_{cmA}$), the third switch ($Q_{m3}$) is turned on and the fourth switch ($Q_{m4}$) is turned off when the modulation signal ($V_s$) is smaller than a second carrier signal ($V_{cmB}$), the third switch ($Q_{m3}$) is turned off and the fourth switch ($Q_{m4}$) is turned on when the modulation signal ($V_s$) is greater than the second carrier signal ($V_{cmB}$).

6. The cascade circuit as claimed in any one of claims 3 to 5, **characterized in that** the each of the power conversion units ($2_1$, $2_2$ ... $2_N$) further comprises a communication and drive circuit, which comprises:

a signal receiving circuit (21) configured to receive the signal to be transmitted ($V_d$, $V_s$);
a carrier signal generating circuit (28) configured to generate a first carrier signal ($V_{cmA}$) corresponding to the first arm of the current power conversion unit ($2_m$) and a second carrier signal ($V_{cmB}$) corresponding to the second arm of the current power conversion unit ($2_m$) based on a carrier generation signal ($V_d$);
a drive signal generating circuit (25) configured to generate drive signals ($G_{m1}$, $G_{m2}$) of the first arm based on the modulation signal ($V_s$) and the first carrier signal ($V_{cmA}$) and drive signals ($G_{m3}$, $G_{m4}$) of the second arm based on the modulation signal ($V_s$) and the second carrier signal ($V_{cmB}$) to be respectively configured to control the first arm and the second arm; and
a signal sending circuit (22) configured to send the signal to be transmitted ($V_d$, $V_s$).

7. The cascade circuit as claimed in claim 6, **characterized in that** the carrier signal generating circuit (28) comprises:

a first carrier signal generating circuit (23) configured to generate the first carrier signal ($V_{cmB}$) based on the carrier generation signal ($V_d$); and
a first phase shifting circuit (24) configured to phase-shift the first carrier signal ($V_{cmA}$) so as to generate the second carrier signal ($V_{cmB}$),

wherein a phase difference between the second carrier signal ($V_{cmB}$) and the first carrier signal ($V_{cmA}$) is 180°.

8. The cascade circuit as claimed in claim 7, **characterized in that** the first carrier signal generating circuit (23) is configured to receive the carrier generation signal ($V_d$) for generating carrier signals of the current power conversion unit ($2_m$) before power conversion is performed, wherein the carrier generation signal ($V_d$) comprises a carrier phase, a carrier period, and a synchronization signal.

9. The cascade circuit as claimed in any one of claims 6 to 8, **characterized in that** the communication and drive circuit further comprises:
a communication enable signal generating circuit (27) configured to output a communication enable signal ($EN_m$) that is effective when the current power conversion unit ($2_m$) shares the reference voltage ($GND_m$) with the adjacent next-stage power conversion unit ($2_{m+1}$), so as to control the signal sending circuit (22) of the current power conversion unit ($2_m$) to send the signal to be transmitted ($V_d$, $V_s$) to the next-stage power conversion unit ($2_{m+1}$).

10. The cascade circuit as claimed in claim 9, **characterized in that** the communication enable signal generating circuit (27) comprises:

a first comparator ($CMP_1$) configured to output a first comparison result based on the modulation signal ($V_s$) and the second carrier signal ($V_{cmB}$) of the current power conversion unit ($2_m$);
a second comparator ($CMP_2$) configured to output a second comparison result based on the modulation signal ($V_s$) and the first carrier signal ($V_{cmA}$) of the next-stage power conversion unit ($2_{m+1}$); and
a logic circuit configured to generate the communication enable signal ($EN_m$) based on the first comparison result and the second comparison result.

11. The cascade circuit as claimed in claim 10, **characterized in that** the first carrier signal ($V_{c(m+1)A}$) of the next-stage power conversion unit ($2_{m+1}$) received by the second comparator ($CMP_2$) is generated by phase-shifting the first carrier signal ($V_{cmA}$) of the current power conversion unit ($2_m$) by $\dfrac{\pi}{N}$, or is obtained from a signal output by the first carrier signal generating circuit (23) of the next-stage power conversion unit ($2_{m+1}$).

12. The cascade circuit as claimed in any one of claims 1 to 11, **characterized in that** the cascade circuit further comprises:
an isolation unit (4) connected between an Nth power conversion unit ($2_N$) and a first power conversion unit ($2_1$) and being configured to isolate signals between the Nth power conversion unit ($2_N$) and the first power conversion unit ($2_1$).

13. The cascade circuit as claimed in claim 12, **characterized in that** when the first power conversion unit ($2_1$) is connected to the controller (3), an output terminal of the isolation unit (4) is connected to the first power conversion unit ($2_1$) through the controller (3), when the Nth power conversion unit ($2_N$) is connected to the controller (3), the output terminal of the isolation unit (4) is connected to the Nth power conversion unit ($2_m$) through the controller (3); and/or **characterized in that** when a Kth power conversion unit ($2_K$) is connected to the controller (3), an output terminal of the isolation unit (4) is connected to the first power conversion unit ($2_1$), and the signal to be transmitted ($V_d$, $V_s$) output by the Nth power conversion unit ($2_N$) is transmitted to the first power conversion unit ($2_1$) through the isolation unit (4), wherein K is a positive integer, $1 < K < N$.

14. A control method of a cascade circuit, the cascade circuit comprising N cascaded power conversion units ($2_1$, $2_2$ ... $2_N$), N being a positive integer greater than or equal to 2, **characterized in that** the control method comprises:

sending a signal to be transmitted ($V_d$, $V_s$) to a connected power conversion unit ($2_K$) through a controller (3); and
controlling each of the power conversion units ($2_1$, $2_2$ ... $2_{N-1}$) to send the signal to be transmitted ($V_d$, $V_s$) to a next-stage power conversion unit ($2_2$...$2_N$) when the each of the power conversion unit ($2_1$, $2_2$ ... $2_{N-1}$) shares a reference voltage ($GND_N$) with the adjacent next-stage power conversion unit ($2_2$, $2_3$ ... $2_N$).

15. The control method as claimed in claim 14, **characterized in that** the signal to be transmitted ($V_d$, $V_s$) comprises a modulation signal ($V_s$);
the control method further comprises:
generating drive signals ($G_{m1}$, $G_{m2}$, $G_{m3}$, $G_{m4}$) based on the modulation signal ($V_s$) to perform power conversion.

16. The control method as claimed in claim 15, **characterized in that** generating the drive signals ($G_{m1}$, $G_{m2}$, $G_{m3}$, $G_{m4}$) based on the modulation signal ($V_s$) to perform power conversion comprises:
controlling states of a first switch ($Q_{m1}$) and a second switch ($Q_{m2}$) of a first arm to be complementary, controlling states of a third switch ($Q_{m3}$) and a fourth switch ($Q_{m4}$) of a second arm to be complementary, and a phase difference between the first switch ($Q_{m1}$) and the third switch ($Q_{m3}$) being 180°.

17. The control method as claimed in claim 16, **characterized in that** in response to turning on the fourth switch ($Q_{m4}$) of the second arm of the previous-stage power conversion unit ($2_m$) and the second switch ($Q_{m2}$) of the first arm of the adjacent next-stage power conversion unit ($2_{m+1}$) simultaneously, the previous-stage power conversion unit ($2_m$) and the adjacent next-stage power conversion unit ($2_{m+1}$) shares the reference voltage ($GND_N$); and/or **characterized in that** in response to a same bus voltage of the previous-stage power conversion unit ($2_m$) and the adjacent next-stage power conversion unit ($2_{m+1}$) and turning on the third switch ($Q_{m3}$) of the second arm of the previous-stage power conversion unit ($2_m$) and the first switch ($Q_{m1}$) of the first arm of the adjacent next-stage power conversion unit ($2_{m+1}$) simultaneously, the previous-stage power conversion unit ($2_m$) and the adjacent next-stage power conversion unit ($2_{m+1}$) share the reference voltage ($GND_N$).

18. The control method as claimed in any one of claims 16 or 17, **characterized in that** generating the drive signals ($G_{m1}$, $G_{m2}$, $G_{m3}$, $G_{m4}$) based on the modulation signal ($V_s$) to perform power conversion comprises:

   generating a first carrier signal ($V_{cmA}$) corresponding to the first arm and a second carrier signal ($V_{cmB}$) corresponding to the second arm based on a carrier generation signal ($V_d$); and generating drive signals ($G_{m1}$, $G_{m2}$) of the first arm based on the modulation signal ($V_d$) and the first carrier signal ($V_{cmA}$) and generating drive signals ($G_{m3}$, $G_{m4}$) of the second arm based on the modulation signal ($V_s$) and the second carrier signal ($V_{cmB}$), which are respectively configured to control the first arm and the second arm.

19. The control method as claimed in claim 18, **characterized in that** controlling the first arm and the second arm comprises:

   controlling the first switch ($Q_{m1}$) of the first arm to be turned on and the second switch ($Q_{m2}$) of the first arm to be turned off in response to the modulation signal ($V_s$) being greater than the first carrier signal ($V_{cmA}$), controlling the first switch ($Q_{m1}$) of the first arm to be turned off and the second switch ($Q_{m2}$) of the first arm to be turned on in response to the modulation signal ($V_a$) being smaller than the first carrier signal

($V_{cmA}$); and controlling the third switch ($Q_{m3}$) of the second arm to be turned off and the fourth switch ($Q_{m4}$) of the second arm to be turned on in response to the modulation signal ($V_a$) being greater than the second carrier signal ($V_{cmB}$), controlling the third switch ($Q_{m3}$) of the second arm to be turned on and the fourth switch ($Q_{m4}$) of the second arm to be turned off in response to the modulation signal ($V_s$) being smaller than the second carrier signal ($V_{cmB}$); and/or **characterized in that** generating the first carrier signal ($V_{cmA}$) corresponding to the first arm and the second carrier signal ($V_{cmB}$) corresponding to the second arm based on the carrier generation signal ($V_d$) comprises:

   receiving the carrier generation signal ($V_d$) comprising a carrier phase, a carrier period, and a synchronization signal before power conversion is performed; generating the first carrier signal ($V_{cmA}$) based on the carrier generation signal ($V_d$); and phase-shifting the first carrier signal ($V_{cmA}$) to generate the second carrier signal ($V_{cmA}$)., wherein a phase difference between the second carrier signal ($V_{cmB}$) and the first carrier signal ($V_{cmA}$) is 180°.

20. The control method as claimed in any one of claims 18 or 19, **characterized in that** controlling each of the power conversion units ($2_1$, $2_2$ ... $2_{N-1}$) to send the signal to be transmitted ($V_d$, $V_s$) to the next-stage power conversion unit ($2_2$...$2_N$) when the each of the power conversion unit ($2_1$, $2_2$ ... $2_{N-1}$) shares the reference voltage ($GND_N$) with the adjacent next-stage power conversion unit ($2_2$, $2_3$ ... $2_N$) comprises: outputting an effective communication enable signal ($EN_m$) when the previous-stage power conversion unit ($2_m$) shares the reference voltage ($GND_N$) with the adjacent next-stage power conversion unit ($2_{m+1}$) so as to control a signal sending circuit (22) of the previous-stage power conversion unit ($2_m$) to send the signal to be transmitted ($V_d$, $V_s$) to the next-stage power conversion unit ($2_{m+1}$).

21. The control method as claimed in claim 20, **characterized in that** outputting the effective communication enable signal (Elm) comprises:

   outputting a first comparison result based on the modulation signal ($V_s$) and the second carrier signal ($V_{cmB}$) of the previous-stage power conversion unit ($2_m$); outputting a second comparison result based on the modulation signal ($V_s$) and the first carrier signal ($V_{cmA}$) of the next-stage power conver-

sion unit ($2_{m+1}$); and

generating the communication enable signal ($EN_m$) based on the first comparison result and the second comparison result; and/or

**characterized in that** the first carrier signal ($V_{c(m+1)A}$) of the next-stage power conversion unit ($2_{m+1}$) is generated by phase-shifting the first carrier signal ($V_{cmA}$) of the previous-stage power conversion unit ($2_m$) by $\dfrac{\pi}{N}$, or is generated by the next-stage power conversion unit ($2_{m+1}$) by receiving the carrier generation signal ($V_d$).

22. An integrated circuit, **characterized in that** the integrated circuit comprises the cascade circuit according to any one of claims 1 to 13.

first power
conversion unit $2_1$

Controller 3

$p_1$ 1

power
supply

$p_2$

second power
conversion unit $2_2$

...

Isolation
unit 4

Nth power
conversion unit $2_N$

**FIG. 1**

**FIG. 2**

FIG. 3

**FIG. 4**

**FIG. 5**

**FIG. 6**

**FIG. 7**

**FIG. 8**

**FIG. 9**

FIG. 10

First power
conversion unit

$2_1$

Second power
conversion unit

$2_2$

$p_1$ — 1

Power
supply

$p_2$

...

Kth power
conversion unit

$2_K$

Controller

3

Isolation unit

4

...

Nth power
conversion unit

$2_N$

**FIG. 11**

```
                                                        ┌─ S100
┌─────────────────────────────────────────────────────┐
│ A signal to be transmitted is sent to a connected    │
│ power conversion unit through a controller           │
└─────────────────────────────────────────────────────┘
                          │
                          ▼
                                                        ┌─ S200
┌─────────────────────────────────────────────────────┐
│ A previous-stage power conversion unit is controlled │
│ to send the signal to be transmitted to a next-stage │
│ power conversion unit when two power conversion units │
│ at adjacent stages share ground                      │
└─────────────────────────────────────────────────────┘
```

**FIG. 12**

Europäisches Patentamt

European Patent Office

Office européen des brevets

# EUROPEAN SEARCH REPORT

Application Number

EP 22 20 3846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/022915 A1 (UNIV SHANDONG [CN]) 11 February 2021 (2021-02-11) | 1-5,14, 22 | INV. H02M7/49 |
| A | * paragraphs [0001], [0011] – [0016] * <br> * paragraphs [0071] – [0077], [0079] * <br> * figure 1 * | 6-13, 15-21 | |
| Y | WO 2014/176861 A1 (SHENZHEN INVT ELECTRIC CO LTD [CN]) 6 November 2014 (2014-11-06) <br> * paragraphs [0122], [0123] * <br> * figure 2 * | 1-5,14, 22 | |
| Y | EP 3 622 365 A1 (SIGNIFY HOLDING BV [NL]) 18 March 2020 (2020-03-18) <br> * paragraphs [0014], [0015], [0047] * <br> * figure 1 * | 1-5,14, 22 | |
| Y | CN 104 333 039 A (ALTENERGY POWER SYSTEM INC) 4 February 2015 (2015-02-04) <br> * abstract * <br> * description of Fig.1 * <br> * figure 1 * | 1-5,14, 22 | |
| | | | TECHNICAL FIELDS SEARCHED (IPC) |
| A | CN 108 631 628 A (NANJING INST RAILWAY TECH) 9 October 2018 (2018-10-09) <br> * abstract * <br> * 2 Modulation method and control method * <br> * figures 2, 4 * | 1,14 | H02M |
| A | CN 108 258 917 A (UNIV HUNAN) 6 July 2018 (2018-07-06) <br> * abstract * <br> * figure 2 * | 1,14 | |

The present search report has been drawn up for all claims

| Place of search | Date of completion of the search | Examiner |
|---|---|---|
| Munich | 2 March 2023 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 20 3846

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2023

| Patent document cited in search report | | Publication date | Patent family member(s) | | Publication date |
|---|---|---|---|---|---|
| WO 2021022915 | A1 | 11-02-2021 | CN | 110365231 A | 22-10-2019 |
| | | | US | 2022052620 A1 | 17-02-2022 |
| | | | WO | 2021022915 A1 | 11-02-2021 |
| WO 2014176861 | A1 | 06-11-2014 | NONE | | |
| EP 3622365 | A1 | 18-03-2020 | CN | 110582736 A | 17-12-2019 |
| | | | DK | 3622365 T3 | 11-10-2021 |
| | | | EP | 3622365 A1 | 18-03-2020 |
| | | | ES | 2893829 T3 | 10-02-2022 |
| | | | US | 2020067320 A1 | 27-02-2020 |
| | | | WO | 2018206529 A1 | 15-11-2018 |
| CN 104333039 | A | 04-02-2015 | NONE | | |
| CN 108631628 | A | 09-10-2018 | NONE | | |
| CN 108258917 | A | 06-07-2018 | NONE | | |

EPO FORM P0459

For more details about this annex : see Official Journal of the European Patent Office, No. 12/82